(19) Europäisches Patentamt
European Patent Office
Office européen des brevets

(11) Publication number: 0 140 620 B1

(12) # EUROPEAN PATENT SPECIFICATION

(45) Date of publication of patent specification: 12.08.87

(51) Int. Cl.⁴: **C 09 B 69/00**, C 09 B 67/22, C 09 C 3/12 // C09C1/36, C09C1/30, C09C1/40

(21) Application number: 84306966.7

(22) Date of filing: 11.10.84

(54) **Silane anthraquinone dyes, composite pigments obtainable therefrom, and processes for preparing the same.**

(30) Priority: **11.10.83 IT 2324083**

(43) Date of publication of application: **08.05.85 Bulletin 85/19**

(45) Publication of the grant of the patent: **12.08.87 Bulletin 87/33**

(84) Designated Contracting States: **BE DE FR GB NL**

(56) References cited:
**EP-A-0 103 986**
**GB-A-2 020 675**
**US-A-4 038 293**

(73) Proprietor: **Montedison S.p.A.**
**31, Foro Buonaparte**
**I-20121 Milan (IT)**

(72) Inventor: **Marraccini, Antonio**
**4, corso Riviera**
**Dormelletto Novara (IT)**
Inventor: **Carlini, Filippo Maria**
**7, corso Torino**
**Novara (IT)**
Inventor: **Pasquale, Antonio**
**8, corso Milano**
**Novara (IT)**
Inventor: **Maranzana, Giorgio**
**51, Strada Fara**
**Novara (IT)**

(74) Representative: **Whalley, Kevin et al**
**MARKS & CLERK 57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 140 620 B1

Courier Press, Leamington Spa, England.

**Description**

This invention relates to anthraquinone dyes containing, in chemical combination, a silane group to the corresponding composite pigments obtainable therefrom by association with an inorganic solid substrate, and to processes for preparing such silane anthraquinone dyes and corresponding composite pigments.

There are known from U.S. Patent No. US—A—4 038 293 quinonoid dyestuffs containing the tris(trimethylsilyloxy)silylalkylamino group.

Whenever used in the following description, the term "composite pigment" means a pigmentary material comprising an anthraquinone dye containing a silane group, chemically bonded with an inorganic solid substrate.

The association of the anthraquinone dye containing a silane group, or, briefly, silane anthraquinone dye, with the solid substrate, imparts pigmentary characteristics typical of the inorganic pigments to the dye.

Such association is obtained by formation of chemical bonds between the silane portion of the dye and the inorganic substrate.

An aim of the present invention to provide silane anthraquinone dyes capable of providing composite pigments having high pigmentary characteristics.

Other aims of the invention are the preparation of the aforesaid dyes and pigments by means of simple and economic methods.

The present invention in one aspect provides anthraquinone dyes containing a silane group of formula:

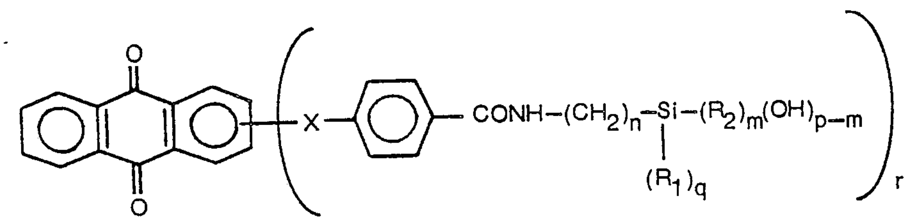

(I)

in which: $R_1$ is an alkyl group containing up to 4 carbon atoms or a phenyl group; $R_2$ is an alkoxyl group containing up to 4 carbon atoms; n is 3, 4 or 5; q is 0 or 1; p and m are integers such that, when q is 0, p is 3 and m is 0, 1, 2 or 3, and when q is 1, p is 2 and m is 0, 1 or 2; r is 1 or 2; and X is a divalent amino (—NH—) or amido (—NHCO—) residue, linked to the alpha or beta positions of the anthraquinone nucleus when r is 1, or linked to the alpha positions of the anthraquinone nucleus when r is 2, and the anthraquinone nucleus may be substituted by one or more R groups selected from $—NH_2$, —NH-alkyl $C_1—C_4$, $—NHCO—CH_3$, —NH-phenyl or —NHCO-phenyl in which the phenyl group is optionally substituted, —OH, $—OCH_3$ —O-phenyl, $—CH_3$, —Cl or —Br, and $—NO_2$.

Such compounds according to the invention may be prepared, according to another aspect of the invention, by a process comprising reacting a silane compound of formula:

$$H_2N—(CH_2)_n—\underset{(R_1)_q}{\underset{|}{Si}}—(R_2)_m(OH)_{p-m} \qquad (II)$$

in which n, $R_1$, q, $R_2$, m and p are as defined above, with the chloride of an anthraquinone carboxylic derivative of formula:

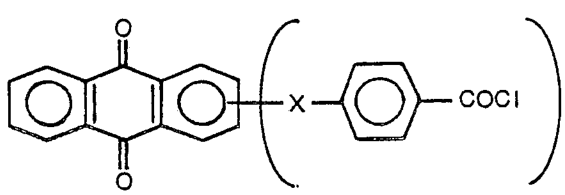

(III)

wherein X and r are as defined above, and the anthraquinone groups or nucleus may be substituted by one or more groups R as defined above, in a substantially stoichiometric molar ratio of the silane (II) to the chloride (III), in a reaction medium comprising an organic solvent, at a temperature from 20° to 100°C, for 1 to 8 hours.

The reaction may be optionally conducted in the presence of a hydrochloric acid-acceptor compound such as $Na_2CO_3$, $NaHCO_3$, triethylamine or pyridine.

As organic solvents there may be used, for example, xylene, toluene, chloro-, dichloro- and trichlorobenzenes, nitrobenzene and dioxane.

The chlorides of formula (III) are preparable according to conventional methods, for example by chlorination of the corresponding anthraquinone carboxylic derivatives with thionyl chloride $SOCl_2$ at temperatures of from 50° to 90°C in an organic solvent such as nitrobenzene.

The anthraquinone carboxylic derivatives are known products and can be prepared according to conventional techniques; among those suitable for preparing the corresponding chloride there are, for example

1-(4-carboxy-phenylamino)-anthraquinone; 4-hydroxy-1-(4-carboxy-phenylamino)-anthraquinone;
4-amino-1-(4-carboxy-phenylamino)-anthraquinone;
4-phenylamino-1-(4-carboxy-phenylamino)-anthraquinone;
4-methylamino-1-(4-carboxy-phenylamino)-anthraquinone;
1-(terephthaloylamino)-anthraquinone;
4-phenylamino-1-(terephthaloylamino)-anthraquinone;
1,4-bis(-terephthaloylamino)-anthraquinone;
1,5-bis(-terephthaloylamino)-anthraquinone;
2,4-dibromo-1-(terephthaloylamino)-anthraquinone;
1-(3-carboxy-phenylamino)-anthraquinone;
1,4-bis(4-carboxy-phenylamino)-anthraquinone;
4-benzoylamino-1-(terephthaloylamino)-anthraquinone; and
1-(isophthaloylamino)-anthraquinone.

As silane compounds of formula (II), those derivable from amino-alkoxy-silanes, such as, for example, γ-aminopropyl-triethoxysilane, δ-amino-butyl-triethoxysilane, δ-aminobutyl-phenyl-diethoxysilane, and γ-aminopropyl-methyl-diethoxysilane have proved to be particularly suitable. Such amino-alkoxy-silanes are known compounds which are commercially available. However, they can be prepared, according to conventional techniques, for example by reaction of the corresponding chloro-alkoxy-silanes with aliphatic amines.

The silane anthraquinone dyes of formula (I) possess a fairly good solubility in organic solvents, have a good tinting strength, with brilliant shades in a chromatic range from greenish-yellow, to red, pure violet, blue, and are characterized by a good photostability.

The silane anthraquinone dyes of formula (I) contain in their molecule silanolic groups and/or alkoxyl groups hydrolyzable to silanolic groups $—Si(OH)_3$, are capable of both self-condensing, by reaction between the abovesaid silanolic groups, and chemically reacting with the surface hydroxyl groups of suitable inorganic substrates, which condense with those of the dyes, with formation of stable chemical bonds between the dye and the substrate, giving rise to a composite product having pigmentary characteristics.

The abovesaid dyes are therefore preferably used in the preparation of composite pigments, according to a further aspect of the invention, comprising silane anthraquinone dyes of formula (I) chemically bonded to an inorganic substrate.

The silane dyes of formula (I) in which q is 0 and n is 3 are particularly suitable for being utilized in preparing composite pigments.

Inorganic substrates particularly suitable to obtain the pigmentary nature of the silane anthraquinone dyes of formula (I) are the following: $TiO_2$, in its forms as gel, in the semicrystalline form, in its form of rutile or anatase, also of the commercial type, in which there may be present surface coatings comprising mixtures of one or more oxides selected from $SiO_2$, $Al_2O_3$, $TiO_2$; furthermore there may be used physical (mechanical) mixtures of $TiO_2$ of $SiO_2$ and/or $Al_2O_3$, as well as $SiO_2$ and/or $Al_2O_3$. The substrates are finely particulated. Owing to their superior characteristics, there are preferably employed mixed substrates of $TiO_2$, $SiO_2$ and/or $Al_2O_3$ obtained by precipitation of $SiO_2$ and/or $Al_2O_3$, also as alumino-silicates, onto particles of crystalline $TiO_2$, according to conventional methods.

In relation to the desired uses, hiding degree or power or tinting strength, the above-mentioned substrates may be employed also in admixture with one another.

The specific surface area of such substrates may vary over a wide range, from 5 to 500 $m^2/g$, preferably from 10 to 200 $m^2/g$.

Composite pigments containing from 10 to 50% by weight of chemically bound silane anthraquinone dye of formula (I) are particularly preferred due to their superior characteristics.

According to a yet further aspect of the invention, a process for preparing the composite pigments comprising the silane anthraquinone dyes (I) chemically bonded to the inorganic substrates comprises reacting the selected substrate with the silane dye (I) in a reaction medium comprising water and/or an inert organic solvent, at a temperature from 20°C to the reflux temperature of the reaction medium, and separating the obtained product (pigment) by filtration, followed by washing and drying.

The treatment can be advantageously carried out by grinding the silane dye with the substrate in the reaction medium. The duration of such treatment may vary from 2 to 12 hours, depending on the reaction temperature employed.

Particularly advantageous results are obtained if the composite pigment, separated by filtration, is subjected to a dry heat-treatment in an oven for 4—8 hours at 60—110°C, prior to washing, which washing

is carried out in order to remove the unreacted silane dye.

To improve the condensation of the dye coating on the substrate , it is possible to operate in the presence of catalysts such as LiOH, $CF_3COOH$, lead acetate, and cobalt naphthenate.

Further advantages are obtainable if the abovesaid process is carried out in the presence of a compound selected from tetra-alkoxy-silanes having up to 4 carbon atoms in each alkoxy group, such as $Si(OCH_3)_4$, or vinyltriethoxy-silane $H_2C{=}CH{-}Si{-}(OC_2H_5)_3$, or alkyl-orthotitanates, such as $Ti(OC_4H_9)_4$, in an amount ranging approximately from 0.1:1 to 1:1 by weight in respect of the dye of formula (I), with which they form insoluble copolymers, which are particularly suitable for coating the substrate.

As inert organic solvents it is possible to use, for example, aliphatic hydrocarbons (n-heptane), chlorinated derivatives thereof (tetrachloroethane), as well as alicyclic and aromatic hydrocarbons and derivatives thereof (benzene, toluene, xylenes, nitrobenzene, chlorobenzenes), alkyl or aryl ethers and ketones (N-methyl-pyrrolidone, diphenylether), oxides (dioxane), amides (dimethylformamide), nitriles (acetonitrile), and sulphoxides (dimethylsulphoxide).

The preparation process of the invention is particularly suitable for obtaining intensely coloured pigments having a high tinting strength, even in the presence of inorganic substrates having a low specific surface area, such as for example highly hiding $TiO_2$.

The composite pigments of the present invention may have a composition varying over a wide range, depending on the nature, granulometry and specific surface area of the substrate particles and in relation to the tinting strength desired for the pigment.

Granulometric analysis of a composite pigment according to the invention shows that the organic portion is essentially distributed on the surface of the inorganic substrate particles.

X-ray diffractometric analysis reveals that the composite pigment particles exhibit crystallinity which is characteristic of the substrate, while the anthraquinone coating is of an amorphous nature.

The anthraquinone pigments of the present invention, due to their composite nature achieved by chemical bonds between the organic silane component and the inorganic component, do not exhibit the typical drawbacks of the simple physical mixtures, wherefore they neither give rise to phenomena such as demixing of the components, differentiated sedimentation, or crystallization, nor change their crystalline form when in contact with aromatic solvents, even under hot conditions.

Furthermore, pigmentary compositions based on solvents, such as those used for the printing inks, do not cause sedimentation phenomena, not even after prolonged storing.

The abovesaid pigments, both in a highly hiding form and in the transparent form, exhibit excellent pigmentary characteristics, are insoluble in common organic and aqueous solvents, exhibit excellent stability to migration in polyvinyl chloride (PVC), to overpainting in stove alkyd enamels and to acid or alkaline treatments. Such pigments possess a good photostability and a good tinting strength, and are stable to heat both when obtained in the transparent form and at increasing hiding degrees.

Therefore they are conveniently employed in painting products, for air and stove enamels, in the pigmentation of plastics such as PVC, polystyrene, polyethyleneterephthalate, etc., and in printing inks, according to conventional applicative techniques.

The mechanical and/or thermal treatments employed in the above-mentioned conventional techniques do not substantially modify the pigmentary characteristics of the composite pigments of the present invention.

The composite pigments exhibit the substantial advantage of being composed of an inorganic substrate, which is inexpensive and is capable of imparting excellent pigmentary characteristics, in particular the desired hiding or transparency degree and an excellent resistance to solvents, stability to crystallization and a non-flocculating nature, on which substrate a silane anthraquinone dye, characterized by a good photostability, high tinting strength and shade purity, is reacted.

In general, the composite pigments according to the invention may be suitably used for colouring paints, aid and stove enamels, printing inks, and plastics materials.

The invention will be further described with reference to the following illustrative examples. In the examples, all parts and percentages, unless otherwise specified, are by weight.

Example 1

A mixture consisting of 21.48 parts of 4-amino-1-(4-carboxy-phenylamino)-anthraquinone, 170 ml of nitrobenzene, 1 ml of dimethylformamide and 19.57 parts of thionyl chloride at 97% was stirred at room temperature for 30 minutes, whereafter it was heated to 95°C for 3 hours. By cooling, filtering and washing with 50 ml of benzene and 500 ml of n-heptane, the chloride of the anthraquinone carboxylic derivative was isolated. A mixture consisting of 15.66 parts of the chloride so obtained, 4.2 parts of triethylamine and 150 ml of nitrobenzene was added, under stirring, at ambient temperature, with 9.3 parts of γ-aminopropyl-triethoxysilane.

After 2 hours, the mixture was gradually heated to 90°C and was maintained at this temperature for 1.5 hours.

After distillation in a solvent vapour stream, the aqueous suspension was hot filtered, washed with methanol, and a blue powder was obtained, which, on elemental analysis, gave the following results: C = 59.8%; H = 4.8%; N = 8.8%; Si = 6%.

Elemental analysis and I.R. spectroscopic analysis revealed that the powder corresponded to the silane dye of formula:

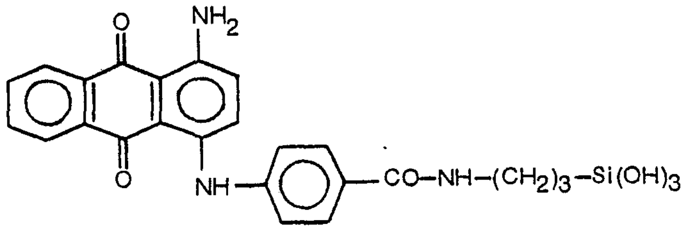

This dye may be partially present also in oligomeric form, through the formation of siloxane bonds

—Si—O—Si—

between the silanol functions $(Si(OH)_3$ present in the molecule.

The dye exhibited a fairly good solubility in the usual organic solvents, as a result of which it was unsuitable for pigmentary applications.

## Examples 2—8

There were prepared 7 silane anthraquinone dyes of different colours by operating according to the manner of example 1, but using the anthraquinone carboxylic derivatives and the silane compounds indicated in Table 1.

TABLE 1

| Example | Anthraquinone carboxylic derivative | Silane compound | Colour |
|---|---|---|---|
| 2 | 4-hydroxy-1-(4-carboxy-phenylamino)-anthraquinone | δ-aminobutyl-triethoxy-silane | red |
| 3 | 4-phenylamino-1-(4-carboxy-phenyl-amino)-anthraquinone | γ-aminopropyl-triethoxy-silane | blue |
| 4 | 4-methylamino-1-(4-carboxy-phenyl-amino)-anthraquinone | γ-aminopropyl-triethoxy-silane | blue |
| 5 | 1-(3-carboxy-phenylamino-anthra-quinone | δ-aminobutyl-triethoxy-silane | red |
| 6 | 4-amino-1-(3-carboxy-phenylamino)-anthraquinone | δ-aminobutyl-triethoxy-silane | blue |
| 7 | 1,4-bis-(4-carboxy-phenylamino)-anthraquinone | γ-aminopropyl-triethoxy-silane | blue |
| 8 | 1-(4-carboxy-phenylamino)-anthra-quinone | γ-aminopropyl-triethoxy-silane | red |

## Example 9

A mixture consisting of 21.5 parts of terephthalyl chloride and 130 ml of nitrobenzene, maintained at 60°C, was added with 10 parts of 1,4-diamino-anthraquinone.

After 0.5 hours the mixture was heated to 115°C for 6 hours. The resulting product was filtered at 60°C, repeatedly washed with acetone, with a mixture of dimethylformamide and 50% of acetone and again with acetone.

A suspension consisting of 14.27 parts of the 1,4-bis-terephthaloylamino-anthraquinone chloride so obtained, 120 ml of nitrobenzene, 3.6 parts of $K_2CO_3$ and 11.5 parts of γ-amino-propyl-triethoxysilane was heated to 60°C for 2.5 hours and successively to 80°C for a further 2 hours.

From the reaction mixture, the solvent was distilled in a vapour stream and, after filtering and washing with methanol, a powder exhibiting an intense red-violet colour was obtained which, on elemental

analysis, gave the following results:

C = 59.5%; H = 5.2%; N = 6.5%; Si = 6.3%.

Elemental analysis and I.R. spectroscopic analysis revealed that the powder corresponded to the silane dye of formula:

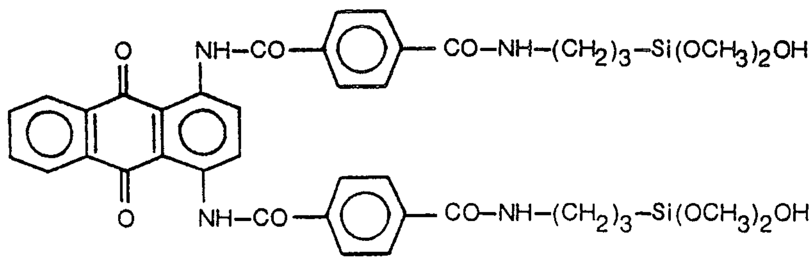

This dye may be partially present as a mixture of products of different hydrolysis degree of groups $-OCH_3$ to groups $-OH$, as well as in the oligomeric form, through the formation of siloxane bonds

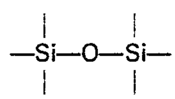

between the silanol functions present in the molecule.

The dye exhibited good pigmentary characteristics and a good stability to solvents, and in applications in stove alkyd enamels provided red transparent products having a good tinting strength and a good stability to overpainting.

### Examples 10—17

8 silane anthraquinone dyes of different colour were prepared by operating according to the manner of example 9, but using the chlorides of the anthraquinone carboxylic derivatives and the silane compounds indicated in Table 2.

| Example | Chloride of: | Silane compound | Colour |
|---|---|---|---|
| 10 | 1-terephthaloylamino-anthraquinone | γ-aminopropyl-triethoxysilane | yellow |
| 11 | 1-isophthaloylamino-anthraquinone | δ-aminobutyl-triethoxysilane | yellow |
| 12 | 1,4-bis-isophthaloylamno-anthraquinone | δ-aminobutyl-triethoxysilane | red |
| 13 | 4-hydroxy-1-terephthaloylamino-anthraquinone | γ-aminopropyl-triethoxysilane | orange |
| 14 | 4-bromo-1-terephthaloylamino-anthraquinone | γ-aminopropyl-triethoxysilane | orange |
| 15 | 4-benzoylamino-1-terephthaloylamino-anthraquinone | γ-aminopropyl-triethoxysilane | violet |
| 16 | 4-phenylamino-1-terephthaloyl-amino-anthraquinone | γ-aminopropyl-triethoxysilane | blue |
| 17 | 1,5-bis-terephthaloylamino-anthraquinone | γ-aminopropyl-triethoxysilane | orange |

### Example 18

A silane anthraquinone composite pigment was prepared by using a mixed inorganic substrate of $TiO_2$, $SiO_2$ and $Al_2O_3$, prepared as follows: 100 parts of $TiO_2$ were dispersed, under mechanical stirring, in 1 liter of water and the dispersion was then heated to 60°C. After a 15 minute stirring, 210 ml of a sodium silicate solution (titer: 365.47 parts/liter of $SiO_2$) were added and successively, in 3 hours, 200 ml of an aluminium sulphate solution (titer: 60 parts/liter of $Al_2O_3$) were additioned. The addition was stopped when the slurry

pH reached a value of 6. The slurry was left under stirring for 1 hour, then the product was filtered, washed with water to remove the soluble salts, and finally dried at a temperature of 70°C.

The dry product was crushed and then ground in an automatic mortar. A white powder (A) was obtained, which had the following composition: $TiO_2$ = 43.4%; $SiO_2$ = 35.1%; $Al_2O_3$ = 7.15%; $H_2O$ = 14.35%, and having a specific surface area of 120 $m^2/g$, an actual specific gravity of 2.74 g/ml, an apparent specific gravity of 0.69 g/cc, a percentage porosity of 7.45 and a total porosity of 1.06 ml/g.

2 parts of the substrate (A) so obtained and 1 part of the dye obtained according to example 1 were reacted at reflux during 8 hours in a mixture consisting of 1/3 of dimethylformamide and 2/3 of xylol, the reaction mixture was cooled down to room temperature, filtered and the resulting cake was treated in an oven at 110°C overnight, whereupon it was hot washed with xylene, dimethylformamide, and methanol and finally dried.

An intense blue powder was obtained which, on elemental analysis, was found to consist of 68% of inorganic ashes.

This powder proved to be particularly stable to treatment, even under hot conditions, with organic solvents or with water. When used in stove alkyl enamels and in polyvinylchloride, it provided highly hiding blue products having excellent tinting strength, stability to overpainting, to migration and to sunlight, when present both in mass and diluted with $TiO_2$.

The powdered composite pigment, subjected to X-ray diffractometric analysis, under CuK α 1.5418 radiation, was found to consist of particles having the crystallinity typical of $TiO_2$ rutile, while $SiO_2$, $Al_2O_3$ and the silane anthraquinone coating proved to be amorphous.

Example 19

1 part of the dye obtained in example 1 was introduced into a reactor along with 70 parts of water and 4.2 ml of a sodium silicate solution ($SiO_2$ content: 365.47 parts/liter).

The suspension was heated to 60°C and, under stirring, it was additioned, in 3 hours, with 4 ml of an aluminium sulphate solution ($Al_2O_3$ content: 60 parts/liter), was maintained at 60°C for 1 hour and then cooled to room temperature.

After filtration, the resulting cake was washed with water to neutral pH, was dried in an oven at 110°C overnight, then repeatedly washed with hot water and finally dried.

A brilliant blue powder was obtained which, on analysis, was found to consist of 67.5% of inorganic ashes.

The composite pigment, on X-ray analysis, was found to consist of amorphous particles.

The powder, in applications in stove enamels and in polyvinylchloride, provided fully transparent blue products, having excellent stability and photostability.

Example 20

1 part of the dye obtained according to example 1 was introduced into a reactor with 70 parts of water, 1 part of $TiO_2$ and 2.1 ml of a sodium silicate solution ($SiO_2$ content: 365.47 parts/liter).

The suspension was heated to 60°C and, under stirring was additioned, in 3 hours, with 2 ml of an aluminium sulphate solution ($Al_2O_3$ content: 60 parts/liter), was maintained at 60°C for 1 hour, then was cooled to room temperature.

After filtering, the resulting cake was washed with water to neutral pH, was dried in an oven at 100°C over night, then repeatedly washed with hot water and finally dried. A powder exhibiting an intense blue shade was obtained which, on elemental analysis, was found to consist of 67.5% of inorganic ashes.

The product exhibited applicative characteristics as well as characteristics of stability, hiding power, tinting strength and diffractometric characteristics analogous with those of the product obtained according to example 18.

Example 21

1 part of the dye obtained according to example 9 and 2 parts of the substrate obtained according to example 18 were ground during 12 hours in a grinder, in wet conditions, in a carrier consisting of dimethylformamide, then, after separation, the product was treated in an oven overnight at 110°C, and successively washed with dimethylformamide and methanol, and finally dried.

An intense-red powder was obtained which, on elemental analysis, was found to consist of 68% of inorganic ashes.

This powder proved to be particularly stable to treatment, even under hot conditions, with organic solvents or with water. In applications in stove alkyd enamels and in polyvinylchloride, it provided highly hiding, brilliant, red products with blue shades, having a good tinting strength, excellent stabilities to overpainting, to migration and to sunlight, when present both in mass and diluted with $TiO_2$.

The powdered composite pigment, subjected to X-ray diffractometric analysis, under CuK α 1.5418 radiation, was found to consist of particles having the crystallinity typical of $TiO_2$ rutile, while $SiO_2$, $Al_2O_3$ and the silane anthraquinone coating proved to be amorphous.

Example 22
(Applications in PVC)

In a rotary-arm mixer there were mixed, at 70°C:

1.0 part of the pigment obtained according to example 18, previously ground,
100 parts of polyvinyl chloride (PVC) in powder form,
1.5 parts of calcium stearate for exerting a complexing and stabilizing action,
3.0 parts of epoxydized soybean oil,
0.5 parts of lubricant (mixture of glycerides from $C_{16}$ to $C_{36}$),
2.0 parts of $TiO_2$.

The resulting mixture was then treated at 180°C in a three-cylinder refiner until there was obtained complete dispersion of the pigment to obtain a highly hiding, blue sheet, having a good colour intensity, a good stability to sunlight, a good tinting strength, a good stability to heat and an excellent stability to migration.

Example 23
(Application in enamels)

5.0 parts of the pigment obtained according to example 21 were mixed by grinding with 95.0 parts of a fluid carrier having the following composition:

22% of alkyd resin,
19% of melamine resin,
59% of xylene.

Homogenizing was accomplished in a ball mill by grinding the mixture in the presence of porcelain balls of 10 mm diameter, for 24 hours.

The enamel so obtained was applied onto a surface to be painted, and was allowed to dry overnight and then it was placed into an oven and left there during 30 minutes at 120°—125°C.

A red painting exhibiting excellent hiding powder, stability to sunlight and to overpainting as well as a good tinting strength was obtained.

With a view to obtaining a paint having a lighter shade and a higher hiding power, 1 part of the enamel prepared as described hereinabove was further diluted with 9 parts of a white synthetic stove enamel (10% of $TiO_2$) having the following composition:

30% of alkyd resin,
27% of melamine resin,
33% of xylene,
10% of $TiO_2$.

Homogenizing was carried out in a ball mill by grinding the mixture in the presence of porcelain balls of 10 mm diameter, during 24 hours.

The cut enamel so obtained was applied onto the surface to be painted, was allowed to dry overnight, then was placed into an oven and left there at 120°—125°C for 30 minutes. A pale red paint was obtained, having excellent general stabilities and a high hiding power.

**Claims**

1. An anthraquinone dye containing a silane group, characterized by having the formula:

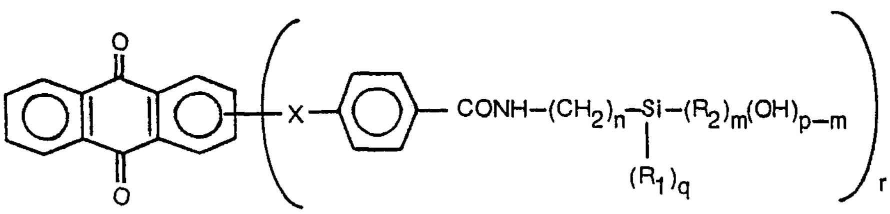

(I)

in which: $R_1$ is an alkyl group containing up to 4 carbon atoms or a phenyl group; $R_2$ is an alkoxyl group containing up to 4 carbon atoms; n is 3, 4 or 5; q is 0 or 1; p and m are integers such that, when q is 0, p is 3 and m is 0, 1, 2 or 3, and when q is 1, p is 2 and m is 0, 1 ore 2; r is 1 or 2; and X represents a divalent amino (NH—) or amido (—NHCO—) residue, linked to the alpha or beta positions of the anthraquinone nucleus when r is 1, or linked to the alpha positions of the anthraquinone nucleus when r is 2, and the anthraquinone nucleus may be substituted by one or more R groups selected from $—NH_2$, —NH-alkyl $C_1—C_4$, $—NHCO—CH_3$, —NH-phenyl or —NHCO-phenyl in which the phenyl group is optionally substituted, —OH, $—OCH_3$, —O-phenyl, $—CH_3$, —Cl or —Br, and $—NO_2$.

2. A silane anthraquinone dye as claimed in claim 1, characterized in that q is 0 and m is 3.

3. A process for preparing an anthraquinone dye according to claim 1, characterized by comprising reacting a silane compound of formula:

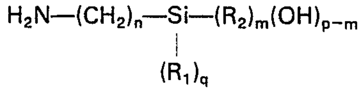 (II)

in which n, $R_1$, q, $R_2$, m and p are as defined in claim 1, with a chloride of an anthraquinone carboxylic derivative of formula:

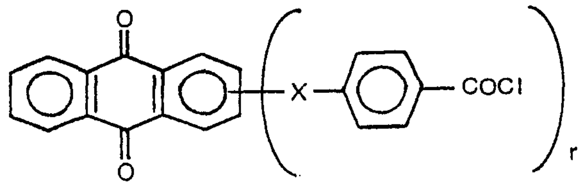 (III)

in which X and r as defined in claim 1 and the anthraquinone nucleus may be substituted by one or more groups R as defined in claim 1, in a substantially stoichiometric molar ratio of the silane (II) to the chloride (III), in a reaction medium comprising an organic solvent, at a temperature from 20° to 100°C, for 1 to 8 hours.

4. A process as claimed in claim 3, characterized in that the reaction is carried out in the presence of a hydrochloric acid-acceptor compound.

5. A process as claimed in claim 4, characterized in that the hydrochloric acid-acceptor compound is selected from $Na_2CO_3$, $NaHCO_3$, triethylamine and pyridine.

6. A process as claimed in any of claims 3 to 5, characterized in that the amino-alkoxysilane of formula (II) is selected from γ-aminopropyl-triethoxysilane, δ-aminobutyl-phenyl-diethoxysilane, γ-aminopropyl-methyl-diethoxysilane, and δ-aminobutyl-triethoxysilane.

7. A process as claimed in any of claims 3 to 6, characterized in that the organic solvent is selected from xylene, toluene, chloro-, dichloro- and trichloro-benzenes, nitrobenzene, and dioxane.

8. A composite pigment, characterized by comprising a silane anthraquinone dye as claimed in claim 1 or 2, chemically bonded to a solid inorganic substrate.

9. A composite pigment as claimed in claim 8, characterized in that the inorganic substrate is selected from $TiO_2$ gel, semicrystalline $TiO_2$, rutile $TiO_2$ and anatase $TiO_2$, mixtures of $TiO_2$ with $SiO_2$ and/or $Al_2O_3$; $SiO_2$ and/or $Al_2O_3$; and mixtures thereof; the said substrate being finely particled and having a specific surface area of from 5 to 500 $m^2/g$.

10. A composite pigment as claimed in claim 8 or 9, characterized by containing from 10 to 50% by weight of chemically bound silane anthraquinone dye.

11. A process for preparing a composite pigment according to claim 8, characterized by comprising reacting the inorganic substrate with a silane anthraquinone dye of formula (I) in a reaction medium comprising water and/or an inert organic solvent, at a temperature from 20°C to the reflux temperature of the reaction medium, and separating the obtained product by filtration, followed by washing and drying.

12. A process as claimed in claim 11, characterized in that the reaction is carried out by grinding the silane dye with the substrate in the presence of the reaction medium, for 2—12 hours.

13. A process as claimed in claim 11 or 12, characterized in that the composite pigment, separated by filtration, is subjected to a dry heat-treatment in an oven at 60—110°C for 4—8 hours prior to washing.

14. A process as claimed in any of claims 11 to 13, characterized in that the reaction is conducted in the presence of a catalyst selected from LiOH, $CF_3COOH$, lead acetate and cobalt naphthenate.

15. A process as claimed in any of claims 11 to 14, characterized in that the reaction is conducted in the presence of a compound selected from tetra-alkoxysilanes containing up to 4 carbon atoms in each alkoxy group, vinyltriethoxysilane and alkylorthotitanates, in a weight ratio with respect to the dye (I) of from 0.1:1 to 1:1.

16. A paint, air enamel, stove enamel, printing ink or plastics material, when coloured with a composite pigment as claimed in any of claims 8 to 10.

**Patentansprüche**

1. Anthrachinonfarbstoff mit einer Silangruppe, gekennzeichnet durch die Formel:

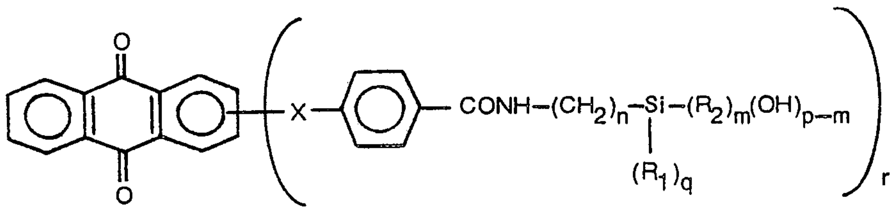

(I)

in der $R_1$ eine Alkylgruppe mit bis zu 4 Kohlenstoffatomen oder eine Phenylgruppe ist; $R_2$ ist eine Alkoxylgruppe mit bis zu 4 Kohlenstoffatomen; n ist 3, 4 oder 5; q ist 0 oder 1; p und m sind ganze Zahlen, wobei, wenn q = 0 ist, p für 3 und m für 0, 1, 2 oder 3 steht, und wenn q = 1 ist, p für 2 und m für 0, 1 oder 2 steht; r bedeutet 1 oder 2, und X steht für einen zweiwertigen Amino- (—NH—) oder Amido- (—NHCO—) Rest, der mit den alpha-oder beta-Stellungen des Anthrachinonkerns verknüpft ist, wenn r = 1 ist, oder mit den alpha-Stellungen des Anthrachinonkerns verknüpft ist, wenn r = 2 ist, wobei der Anthrachinonkern substituiert sein kann durch eine oder mehrere Gruppen R, ausgewählt aus $—NH_2$. $—NH—C_1—C_4$-alkyl, $—NHCO—CH_3$, —NH-phenyl oder —NHCO-phenyl, wobei die Phenylgruppe gegebenenfalls substituiert ist, —OH, $—OCH_3$, —O-phenyl, $—CH_3$, —Cl oder —Br, und $—NO_2$.

2. Silan-anthrachinonfarbstoff nach Anspruch 1, dadurch gekennzeichnet, dass q = 1 und m = 3 ist.

3. Verfahren zur Herstellung eines Anthrachinonfarbstoffes nach Anspruch 1, dadurch gekennzeichnet, dass eine Silanverbindung der Formel:

$$H_2N—(CH_2)_n—\underset{\displaystyle (R_1)_q}{\underset{|}{Si}}—(R_2)_m(OH)_{p-m} \qquad \text{(III)}$$

in der n, $R_1$, q, $R_2$, m und p die in Anspruch 1 genannten Bedeutungen besitzen, mit einem Chlorid eines Anthrachinoncarbonsäurederivates der Formel:

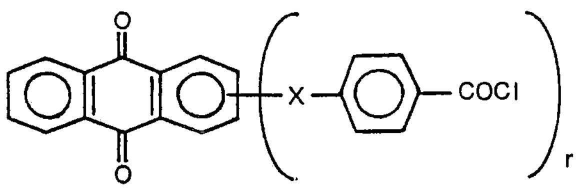

(III)

in der X und r wie in Anspruch 1 definiert sind, und der Anthrachinonkern durch eine oder mehrere Gruppen R der in Anspruch 1 genannten Bedeutung substituiert sein kann, in einem praktisch stöchiometrischen Molverhältnis von Silan (II) zu Chlorid (III) in einem Reaktionsmedium, das ein organisches Lösungsmittel umfaßt, bei einer Temperatur von 20° bis 100°C für 1 bis 8 Stunden umgesetzt wird.

4. Verfahren nach Anspruch 3, dadurch gekennzeichnet, dass die Reaktion in Anwesenheit einer Salzsäure-Akzeptorverbindung durchgeführt wird.

5. Verfahren nach Anspruch 4, dadurch gekennzeichnet, dass die Salzsäure-Akzeptorverbindung ausgewählt wird aus $Na_2CO_3$, $NaHCO_3$, Triäthylamin und Pyridin.

6. Verfahren nach Anspruch 3 bis 5 dadurch gekennzeichnet, dass das Amino-alkoxysilan der Formel (II) ausgewählt wird aus gamma-Aminopropyl-triäthoxysilan, delta-Aminobutylphenyl-diäthoxysilan, gamma-Aminopropyl-methyl-diäthoxysilan und delta-Aminobutyl-triäthoxysilan.

7. Verfahren nach Anspruch 3 bis 6, dadurch gekennzeichnet, dadurch gekennzeichnet, dass das organische Lösungsmittel ausgewählt wird aus Xylol, Toluol, Chlor, Dichlor- und Trichlorbenzolen, Nitrobenzol und Dioxan.

8. Pigmentzusammensetzung, dadurch gekennzeichnet, dass sie einen Silananthrachinonfarbstoff nach Anspruch 1 oder 2 umfaßt, chemisch gebunden an ein festes anorganisches Substrat.

9. Pigmentzusammensetzung nach Anspruch 8, dadurch gekennzeichnet, dass das anorganische Substrat ausgewählt ist aus $TiO_2$-Gel, semikristallinem $TiO_2$, Rutil-$TiO_2$ und Anatas-$TiO_2$, Mischungen von $TiO_2$ mit $SiO_2$ und/oder $Al_2O_3$; $SiO_2$ und/oder $Al_2O_3$; und Mischungen dieser Verbindungen, wobei das Substrat fein zerteilt ist und eine spezifische Oberfläche von 5 bis 500 $m_2/g$ besitzt.

10. Pigmentzusammensetzung nach Anspruch 8 oder 9, dadurch gekennzeichnet, dass sie 10 bis 50 Gew.-% chemisch gebundenen Anthrachinonfarbstoff enthält.

11. Verfahren zur Herstellung einer Pigmentzusammensetzung nach Anspruch 8, dadurch gekennzeichnet, dass das organische Substrat mit einem Silananthrachinonfarbstoff der Formel (I) in einem Reaktionsmedium, das Wasser under/oder ein inertes organisches Lösungsmittel umfaßt, bei einer Temperatur von 20°C bis zur Rückflusstemperatur des Reaktionsmediums umgesetzt und das erhaltene Produkt durch Filtration abgetrennt und anschliessend gewaschen und getrocknet wird.

12. Verfahren nach Anspruch 11, dadurch gekennzeichnet, dass die Reaktion durchgeführt wird, indem der Silanfarbstoff mit dem Substrat in Anwesenheit des Reaktionsmediums 2 bis 12 Stunden vermahlen wird.

13. Verfahren nach Anspruch 11 oder 12, dadurch gekennzeichnet, dass das durch Filtrieren abgetrennte Produkt vor dem Waschen 4 bis 8 Stunden in einem Ofen bei 60 bis 110°C einer Trockenwärmebehandlung unterzogen wird.

14. Verfahren nach Anspruch 11 bis 13, dadurch gekennzeichnet, dass die Reaktion in Answesenheit eines Katalysators, ausgewählt aus LiOH, $CF_3COOH$, Bleiacetat und Kobaltnaphthenat, durchgeführt wird.

15. Verfahren nach Anspruch 11 bis 14, dadurch gekennzeichnet, dass die Reaktion durchgeführt wird in Anwesenheit einer Verbindung, die ausgewählt wird aus Tetraalkoxysilanen mit bis zu 4 Kohlenstoffatomen in jeder Alkoxygruppe, Vinyltriäthoxysilanen und Alkylorthotitanaten, und deren Gewichtsverhältnis zu dem Farbstoff (I) von 0,1:1 bis 1:1 beträgt.

16. Anstrichfarben, Luftlacke, Ofenlacke, Drucktinten oder Kunststoffmaterialien, mit einer Pigmentzusammensetzung nach Anspruch 8 bis 10 gefärbt.

**Revendications**

1. Un colorant anthraquinonique contenant un groupe silane, caractérisé en ce qu'il présente la formule:

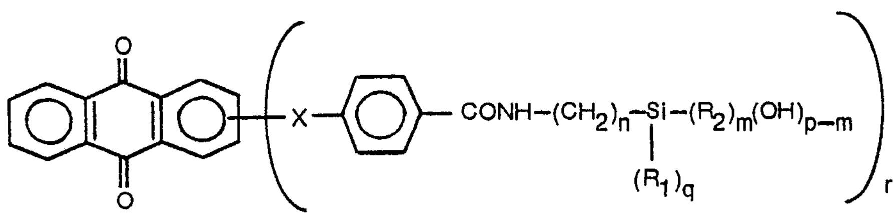

(I)

dans laquelle:

$R_1$ est un radical alkyle contenant jusqu'à 4 atomes de carbone ou un radical phényle;

$R_2$ est un radical alkoxy contenant jusqu'à 4 atomes de carbone;

n est égal à 3, 4 ou 5;

q est égal à 0 ou 1;

p et m sont des nombres entiers tels que, lorsque q est égal à 0, p est égal à 3 et m est égal à 0, 1, 2 ou 3, et que lorsque q est égal à 1, p est égal à 2 et m est égal à 0, 1 ou 2;

r est égal à 1 ou 2; et

X représente un résidu amino (—NH—) ou amido (—NHCO—) divalent, lié en position alpha ou béta du noyau anthraquinone lorsque r est égal à 1 ou lié en positions alpha du noyau anthraquinone lorsque r est égal à 2 et le noyau anthraquinone étant éventuellement substitué par un ou plusieurs groupes R choisis parmi $—NH_2$, —NH-alkyle en $C_1$ à $C_4$, $—NHCO—CH_3$, —NH-phényle ou —NHCO-phényle dans lesquels le groupe phényle est éventuellement substitué, —OH, $—OCH_3$, —O-phényle, $—CH_3$, —Cl ou —Br, et $—NO_2$.

2. Un noyau anthraquinonique à base de silane tel que revendiqué dans la revendication 1, caractérisé en ce que q est égal à 0 et m est égal à 3.

3. Un procédé de préparation d'un colorant anthraquinonique selon la revendication 1, caractérisé en ce qu'il consiste à faire réagir un composé consistant en un silane de formule:

$$H_2N—(CH_2)_n—\underset{\underset{(R_1)_q}{|}}{Si}—(R_2)_m(OH)_{p-m} \qquad (II)$$

dans laquelle:

n, $R_1$, q, $R_2$, m et p sont tels que définis dans la revendication 1, avec un chlorure d'un dérivé anthraquinone carboxylique de formule:

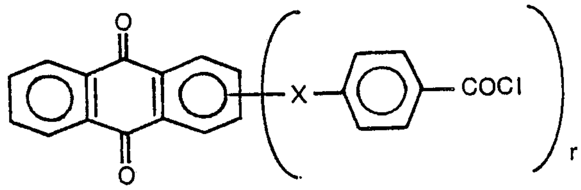

(III)

dans laquelle:

X et R sont tels que définis dans la revendication 1, et le noyau anthraquinone peut être substitué par un ou plusieurs groupes R tels que définis dans la revendication 1, utilisant le rapport molaire pratiquement stoechiométrique du silane (II)-chlorure (III), dans un milieu réactionnel comprenant un solvant organique à une température comprise entre 20 et 100°C pendant une à huit heures.

4. Un procédé ainsi que revendiqué dans la revendication 3, caractérisé en ce que la réaction est mise en oeuvre en présence d'un composé accepteur d'acide chlorhydrique.

5. Un procédé ainsi que revendiqué dans la revendication 4, caractérisé en ce que le composé accepteur d'acide chlorhydrique est choisi parmi $Na_2CO_3$, $NaHCO_3$, triéthylamine et pyridine.

6. Un procédé ainsi que revendiqué dans l'une quelconque des revendications 3 à 5, caractérisé en ce que l'aminoalkoxysilane de formule (II) est choisi parmi γ-aminopropyltriéthoxysilane, δ-aminobutyl-phényl-diéthoxysilane, γ-aminopropyl-méthyl-diéthoxysilane et δ-aminobutyl-triéthoxysilane.

7. Un procédé ainsi revendiqué dans l'une quelconque des revendication 3 à 6, caractérisé en ce que le solvant organique est choisi parmi xylène, toluène, chloro-, dichloro- et trichloro-benzènes, nitrobenzène et dioxane.

8. Un pigment composite caractérisé en ce qu'il comprend un colorant anthraquinonique à base de silane ainsi que revendiqué dans les revendications 1 ou 2, chimiquement lié à un substrat minéral solide.

9. Un pigment composite ainsi que revendiqué dans la revendication 8, caractérisé en ce que substrat minéral est choisi parmi $TiO_2$ sous forme de gel, $TiO_2$ semi-cristalline, $TiO_2$ sous forme de rutile, $TiO_2$ sous forme d'anatase, mélanges de $TiO_2$ avec $SiO_2$ ou $Al_2O_3$, $SiO_2$ et/ou $Al_2O_3$; et leurs mélanges, ledit substrat étant sous forme de particules fines et présentant aune aire superficielle spécifique comprise entre 5 et 500 $m^2/g$.

10. Un pigment composite ainsi que revendiqué dans la revendication 8 ou 9, caractérisé en ce qu'il contient 10 à 50% en poids de colorant anthraquinonique à base de silane qui lui est chimiquement lié.

11. Un procédé de préparation d'un pigment composite selon la revendication 8, caractérisé en ce qu'il comprend la réaction du substrat minéral avec un colorant anthraquinonique à base de silane, de formule (I), dans un milieu réactionnel comprenant de l'eau et/ou un solvant organique inerte, à une température comprise entre 20°C et la température de reflux du milieu réactionnel, puis à séparer le produit obtenu par filtration suivie d'un lavage et d'un séchage.

12. Un procédé ainsi que revendiqué dans la revendication 11, caractérisé en ce que la réaction est mise en oeuvre par broyage du colorant à base de silane avec le substrat en présence du milieu réactionnel pendant deux à douze heures.

13. Un procédé ainsi que revendiqué dans la revendication 11 ou 12, caractérisé en ce que le pigment composite, séparé par filtration, est soumis à un traitement thermique à sec en étuve à 60—110°C pendant quatre à huit heures préalablement au lavage.

14. Un procédé ainsi que revendiqué dans l'une quelconque des revendications 11 à 13, caractérisé en ce que la réaction est mise en oeuvre en présence d'un catalyseur choisi parmi LiOH, $CF_3COOH$, l'acétate de plomb et le naphténate de cobalt.

15. Un procédé ainsi que revendiqué dans l'une quelconque des revendications 11 à 14, caractérisé en ce que la réaction est mise en oeuvre en présence d'un composé choisi parmi tétra-alkoxysilane contenant jusqu'à 4 atomes de carbone dans chaque radical alkoxy, vinyltriéthoxysilane et alkylorthotitanates, utilisés dans le rapport pondéral par rapport au colorant (I) compris entre 0,1/1 et 1/1.

16. Une peinture, un émail à l'air, un émail au four, un encre d'imprimerie ou une matière plastique, colorés à l'aide d'un pigment composite, ainsi que revendiqués dans l'une quelconque des revendications 8 à 10.